# EUROPÄISCHE PATENTSCHRIFT

(11) **EP 3 091 273 B1**
(45) Veröffentlichungstag und Bekanntmachung des Hinweises auf die Patenterteilung: **11.11.2020**
(21) Anmeldenummer: 15166297.0
(22) Anmeldetag: 04.05.2015
(51) Int. Cl.: G02B 5/02, F21W 102/18, F21S 41/255, F21S 41/275

(54) **OPTISCHE STRUKTUR FÜR SIGNLIGHT**
OPTICAL STRUCTURE FOR LIGHT SIGN
STRUCTURE OPTIQUE POUR VOYANT LUMINEUX

(43) Veröffentlichungstag der Anmeldung: 09.11.2016
(73) Patentinhaber: ZKW Group GmbH, 3250 Wieselburg (AT)
(72) Erfinder: Kieslinger, Dietmar, 2604 Theresienfeld (AT); Pürstinger, Josef, 3250 Wieselburg (AT); Danner, Markus, 2252 Ollersdorf (AT)
(74) Vertreter: Patentanwaltskanzlei Matschnig & Forsthuber OG

(56) Entgegenhaltungen:
- EP-A2- 2 587 125
- WO-A1-2015/031924
- WO-A1-2015/031925
- DE-A1-102008 023 551
- DE-A1-102009 020 593
- DE-A1-102012 107 426
- US-A1- 2014 334 177

## Beschreibung

Die Erfindung betrifft eine optische Struktur für eine Beleuchtungsvorrichtung eines Kraftfahrzeugscheinwerfers, welche Beleuchtungsvorrichtung zur Abstrahlung von Licht zur Bildung einer ersten unmodifizierten Lichtverteilung in einem Bereich vor der Beleuchtungsvorrichtung eingerichtet ist, wobei die optische Struktur der Beleuchtungsvorrichtung derart zugeordnet oder derart Teil der Beleuchtungsvorrichtung ist, dass die optische Struktur von zumindest einem Teil des gesamten Lichtstrom der Beleuchtungsvorrichtung durchstrahlt wird, wobei die - von der Beleuchtungsvorrichtung erzeugte, unmodifizierte Lichtverteilung - von der optischen Struktur zu einer vorgebbaren, modifizierten zweiten Lichtverteilung modifiziert ist, wobei die optische Struktur aus zwei, drei oder mehreren optischen Strukturelementen besteht, wobei jedes Strukturelement eine Licht streuende Wirkung aufweist. Eine solche optische Struktur ist in den Patentveröffentlichungen DE102008023551 A1 und WO2015/031924 A1 offenbart.

Weiters betrifft die Erfindung eine Beleuchtungsvorrichtung für einen Fahrzeugscheinwerfer mit einer solchen optischen Struktur.

Außerdem betrifft die Erfindung einen Fahrzeugscheinwerfer mit zumindest einer solchen Beleuchtungsvorrichtung.

Nach den gesetzlichen Bestimmungen haben Lichtverteilungen von Fahrzeugscheinwerfern eine Reihe von Voraussetzungen zu erfüllen.

Zum Beispiel sind nach ECE und SAE oberhalb der Hell-Dunkellinie (HD-Linie) - also außerhalb des primär beleuchteten Bereichs - in bestimmten Regionen minimale und maximale Lichtstärken erforderlich. Diese fungieren als "Signlight" und ermöglichen das Ausleuchten von Überkopf-Wegweisern bei Anstrahlung durch vorbeifahrende Fahrzeuge. Die verwendeten Lichtstärken liegen üblicherweise über den üblichen Streulichtwerten aber bei weitem unter den Lichtstärken unterhalb der HD-Linie. Die geforderten Lichtwerte müssen mit möglichst geringer Blendwirkung erzielt werden.

"Signlight" wird üblicherweise durch spezielle Facetten in der Projektionslinse (Größe zumindest einige Millimeter) oder durch diskrete, kleine Erhebungen realisiert. Nachteilig daran ist insbesondere, dass diese Strukturen von außen als helle Lichtpunkte wahrnehmbar sind und damit vor allem aus Designgründen zunehmend abgelehnt werden. Außerdem sind derartige Vorrichtungen auf das dahinterliegende optische System abgestimmt - werden daran Änderungen vorgenommen, ist die angestrebte Funktion nicht mehr sichergestellt.

Weiters sind aus gesetzlichen Gründen definiert unscharfe Hell-Dunkel-Grenzen notwendig, sodass HD-Linien weder zu scharf noch zu verwaschen abgebildet werden, d.h. die maximale Schärfe der HD-Linie ist gesetzlich definiert. Eine solche Verwischung der HD-Linie führt dazu, dass die HD-Linie vom Fahrer als "weicher" und subjektiv angenehmer empfunden wird.

Die Quantifizierung dieses HD-Übergangs erfolgt durch das Maximum eines Gradienten entlang eines vertikalen Schnitts durch die Helldunkelgrenze. Dazu wird der Logarithmus der Beleuchtungsstärke an Messpunkten in 0,1°-Abständen errechnet und deren Differenz gebildet, wodurch man die Gradientenfunktion erhält. Das Maximum dieser Funktion wird als Gradient der HD-Grenze bezeichnet. Da diese Definition die menschliche Helligkeitswahrnehmung nur ungenau nachbildet, können unterschiedlich wahrgenommene HD-Linien denselben gemessenen Gradientenwert aufweisen bzw. bei ähnlich aussehenden HD-Linien können unterschiedliche Gradienten gemessen werden.

Gradientenaufweichung erfolgt üblicherweise durch die Veränderung der Linsenoberfläche. einer Linse einer Beleuchtungsvorrichtung. Gemäß dem Stand der Technik sind verschiedene Lösungen gebräuchlich: Durch statistisches Aufrauhen der Linsenoberfläche kann beispielsweise eine weichere HD-Grenze erreicht werden, allerdings kommt es dadurch zur Blendung entgegenkommender Verkehrsteilnehmer. In anderen Varianten wird eine Modulation (z.B. Überlagerung von zwei Sinuswellen, kleine Vertiefungen in Form von Kugelabschnitten, etc.) auf die Linsenoberfläche aufgebracht. Derartige Lösungen sind stark von der Lichtstromverteilung durch die Linse abhängig, diesbezügliche Änderungen, beispielsweise durch Variation der Lichttechnik, wirken sich dann stark und teilweise negativ auf die erzeugte Lichtstromverteilung aus.

Die beschriebenen Nachteile des Stands der Technik sollen ausgeräumt werden. Es ist daher eine Aufgabe der Erfindung, ein refraktives optisches Bauteil bereit zu stellen, mit dem ein Lichtbild mit "Signlight" realisiert werden kann, dass die gesetzlichen vorgeschriebenen Werte erfüllt und gleichzeitig nicht als störend empfunden wird.

Diese Aufgabe wird mit einer eingangs erwähnten optischen Struktur dadurch gelöst, dass eine erste Teilmenge der Strukturelemente derart ausgebildet ist, dass auf diese erste Teilmenge der Strukturelemente eintreffende, von der Beleuchtungsvorrichtung erzeugte Strahlenbündel durch die erste Teilmenge der Strukturelemente durchtreten, wobei jedes Strahlenbündel von dem jeweiligen Strukturelement zu einem ersten Austrittsstrahlenbündel, zu einem zweiten Austrittsstrahlenbündel und zu zumindest einem weiteren Austrittstrahlenbündel gebrochen ist.

Das oben genannte von einer Beleuchtungsvorrichtung erzeugte Lichtbild wird als eine Überlagerung von Streubildern einzelner Strukturelemente gebildet. Dabei wird das Streubild eines einzelnen Strukturelements durch das durch das Strukturelement durchtretende Licht erzeugt.

Verschiedene Bereiche im Streubild werden ausgeleuchtet, wenn zumindest zwei von den Austrittsstrahlenbündeln im Streubild nicht überlagern.

Dabei kann vorgesehen sein, dass eine zweite Teilmenge der Strukturelemente derart ausgebildet ist, dass das auf diese zweite Teilmenge der Strukturelemente eintreffende Licht in Form von genau einem Strahlenbündel gestreut ist.

Dabei ist es durchaus möglich, dass die zweite Teilmenge der Strukturelemente leer ist und die optische Struktur nur aus den Strukturelementen der ersten Teilmenge besteht. Die Größe der zweiten Teilmenge kann beispielsweise davon abhängen, wieviel Licht in Form von oben erwähnten weiteren Austrittsstrahlenbündel gestreut werden muss.

Die Herstellung der optischen Struktur kann leichter automatisiert werden, wenn die Strukturelemente eine erfindungsgemäße sechseckige, vorzugsweise eine regelmäßige sechseckige Grundfläche aufweisen, d.h., dass die Grundflächen der Strukturelemente ein sechseckiges, vorzugsweise ein regelmäßiges sechseckiges Gitter vollständig bedecken und die Flächen zwischen den Eckpunkten des Gitters von der Grundfläche von genau einem Strukturelement bedeckt sind.

Dabei kann in diesem Fall von Vorteil sein, wenn die Grundflächen als regelmäßige Sechsecke ausgebildet sind, das sechseckige Gitter als regelmäßiges sechseckiges Gitter ausgebildet ist, welches regelmäßige sechseckige Gitter eine, zwei oder mehrere parallel verlaufenden Reihen aufweist, welche Reihen parallel zu einer durch eine Diagonale über zwei Seiten einer der Flächen definierten Richtung verlaufen, wobei die als regelmäßige Sechsecke ausgebildeten Grundflächen der ersten Teilmenge der Strukturelemente jede zweite Reihe bedecken.

Um Signlight Bereich im Lichtbild optimal auszuleuchten, ist erfindungsgemäß vorgesehen, dass die erste Teilmenge der Strukturelemente zumindest einen Anstiegsbereich, einen Auslaufbereich und und zumindest eine ansteigende Flanke aufweist, wobei der Anstiegsbereich das auf das jeweilige Strukturelement eintreffende, von der Beleuchtungsvorrichtung erzeugte Strahlenbündel zu dem ersten Austrittsstrahlenbündel, der Auslaufbereich das auf das jeweilige Strukturelement eintreffende, von der Beleuchtungsvorrichtung erzeugte Strahlenbündel zu dem zweiten Austrittsstrahlenbündel, und die zumindest eine ansteigende Flanke das auf das jeweilige Strukturelement eintreffende, von der Beleuchtungsvorrichtung erzeugte Strahlenbündel zu zumindest einem weiteren Austrittsstrahlenbündel brechen.

Dabei kann es vorgesehen sein, dass der Anstiegsbereich einen im Wesentlichen linearen Verlauf und / oder der Auslaufbereich im Wesentlichen einen S-förmigen, vorzugsweise einer cos-Funktion ähnlichen, Verlauf aufweisen.

Darüber hinaus ist es für die Fertigung vom besonderen Vorteil, wenn der Anstiegsbereich in die zumindest eine ansteigende Flanke stetig übergeht und / oder die zumindest eine ansteigende Flanke in den Auslaufbereich stetig übergeht.

Außerdem ist es vorteilhaft, wenn die Strukturelemente jeweils in Bezug auf eine durch einen geometrischen Mittelpunkt des Strukturelements parallel zu der Diagonale über zwei Seiten verlaufende Achse symmetrisch, insbesondere spiegelsymmetrisch ausgebildet sind.

Gemäß der Erfindung ist vorgesehen, dass die zumindest eine ansteigende Flanke in einem Schnitt durch das Strukturelement entlang einer zu der Grundfläche parallelen Ebene im Wesentlichen V-förmig ausgebildet ist.

Es kann mit Vorteil vorgesehen sein, dass die zumindest eine ansteigende Flanke in einem Schnitt durch das Strukturelement entlang einer zu der Grundfläche parallelen Ebene im in Bezug auf eine durch den geometrischen Mittelpunkt des Strukturelements parallel zu der Diagonale über zwei Seiten verlaufende Achse symmetrisch, insbesondere spiegelsymmetrisch ausgebildet ist und einen Eckpunkt und einen Öffnungswinkel aufweist.

Es ist vorteilhaft, wenn der Öffnungswinkel zwischen 2° und 180° oder zwischen 10° und 180° oder zwischen 20° und 180° oder zwischen 30° und 180° oder zwischen 40° und 180° oder zwischen 50° und 180° oder zwischen 60° und 180° oder zwischen 70° und 180° oder zwischen 80° und 180° oder zwischen 90° und 180° oder zwischen 100° und 180° oder zwischen 110° und 180° oder zwischen 120° und 180° oder zwischen 130° und 180° oder zwischen 140° und 180° oder zwischen 150° und 180° oder zwischen 160° und 180° oder zwischen 170° und 180° beträgt.

Ebenso ist eine erfindungsgemäße optische Struktur von Vorteil für eine Beleuchtungsvorrichtung, welche Beleuchtungsvorrichtung dazu eingerichtet ist, das von ihr abgestrahlte Licht in Form einer abgeblendeten Lichtverteilung, insbesondere einer Abblendlichtverteilung, abzubilden, wobei die abgeblendete Lichtverteilung, insbesondere die Abblendlichtverteilung eine HD-Grenze aufweist, wobei erfindungsgemäß die optische Struktur, insbesondere die Strukturelemente derart ausgebildet ist/sind, dass ein Anteil des Lichtstroms der Beleuchtungsvorrichtung in einen Bereich oberhalb der HD-Grenze abgebildet wird.

Auf diese Weise kann mit der erfindungsgemäßen optischen Struktur auf optimale Weise ein eingangs beschriebenes Signlight erzeugt werden, indem beispielsweise jedes optische Strukturelement einen geringen Anteil des durch das Strukturelement durchtretenden Lichtstromes in einen entsprechenden Bereich ablenkt. Dabei ist es zweckdienlich die Ablenkwinkeln einzelner Austrittsstrahlenbündel auf einem Streubild zu betrachten, auf welchem Streubild ein orthogonales Koordinatensystem mit einer horizontalen (h-Achse) und einer vertikalen (v-Achse) definiert ist.

Bei einer konkreten Ausführungsform der Erfindung ist vorgesehen, dass die Strukturelemente einen Anstiegsbereich, einen Auslaufbereich und genau eine ansteigende Flanke aufweisen, wobei der auf den Anstiegsbereich des Strukturelements einfallende Teil des Strahlenbündels zu einem ersten Austrittsstrahlenbündel gebrochen ist, welches erste Austrittsstrahlenbündel unterhalb der h-Achse gestreut ist, der auf den Auslaufbereich des Strukturelements einfallende Teil des Strahlenbündels zu einem zweiten Austrittsstrahlenbündel gebrochen ist, welches zweite Austrittsstrahlenbündel oberhalb der h-Achse gestreut ist, der auf die Flanke des Strukturelements einfallende Teil des Strahlenbündels zu einem dritten Austrittsstrahlenbündel gebrochen ist, welches dritte Austrittsstrahlenbündel oberhalb der h-Achse gestreut ist.

Dabei hat sich als zweckmäßig erwiesen, wenn das zweite Austrittsstrahlenbündel in einen Bereich zwischen 0° und 3° oberhalb der h-Achse gestreut ist.

Um die gewünschte Ablenkung der Austrittsstrahlenbündel zu gewährleisten, ist es zweckdienlich, wenn die Flanke einen Anstieg in einem Bereich zwischen 5° und 20° oder einen Anstieg von ca. 13,8° bzw. 18,9° aufweist und das dritte Austrittsstrahlenbündel in einen Bereich zwischen 2° und 4° oder zwischen 4° und 5° oder zwischen 5° und 7° oberhalb der h-Achse gestreut ist.

Bei einer weiteren konkreten Ausführungsform kann vorgesehen sein, dass die Strukturelemente einen Anstiegsbereich, einen Auslaufbereich und genau drei ansteigenden Flanken aufweisen, wobei der auf den Anstiegsbereich des Strukturelements einfallende Teil des Strahlenbündels zu einem ersten Austrittsstrahlenbündel gebrochen ist, welches erste Austrittsstrahlenbündel unterhalb der h-Achse gestreut ist, der auf den Auslaufbereich des Strukturelements einfallende Teil des Strahlenbündels zu einem zweiten Austrittsstrahlenbündel gebrochen ist, welches zweite Austrittsstrahlenbündel oberhalb der h-Achse gestreut ist, der auf die Flanken des Strukturelements einfallende Teil des Strahlenbündels jeweils zu einem dritten, einem vierten und einem fünften Austrittsstrahlenbündel gebrochen ist, wobei die Austrittsstrahlenbündel in einen Bereich oberhalb der h-Achse gestreut sind und das vierte Austrittstrahlbündel weder das dritte Austrittsstrahlenbündel noch das fünfte Austrittsstrahlenbündel im Streubild überlappt. Dabei ist es zweckdienlich, wenn das zweite Austrittsstrahlenbündel in einen Bereich zwischen 0° und 3° oberhalb der h-Achse gestreut ist.

Darüber hinaus ist es zweckmäßig, wenn erste und die dritte Flanke einen Anstieg in einem Bereich zwischen 8° und 12° oder einen Anstieg von ca. 10° aufweisen und die zweite Flanke einen Anstieg in einem Bereich zwischen 12° und 16° oder einen Anstieg von ca. 14° aufweist und das dritte und das fünfte Austrittsstrahlenbündel in einen Bereich zwischen 4° und 6° oberhalb der h-Achse gestreut sind und das vierte Austrittsstrahlenbündel in einen Bereich zwischen 6° und 8° oberhalb der h-Achse gestreut ist.

Außerdem kann vorgesehen sein, dass die Strukturelemente einen Anstiegsbereich, einen Auslaufbereich und eine Flanke aufweisen, wobei die Flanke V-förmig ausgebildet ist und einen Eckpunkt und einen Öffnungswinkel aufweist, wobei der Eckpunkt im geometrischen Mittelpunkt ihrer Grundfläche liegt, wobei der auf den Anstiegsbereich des Strukturelements einfallende Teil des Strahlenbündels zu einem ersten Austrittsstrahlenbündel gebrochen ist, welches erste Austrittsstrahlenbündel unterhalb der h-Achse gestreut ist, der auf den Auslaufbereich des Strukturelements einfallende Teil des Strahlenbündels zu einem zweiten Austrittsstrahlenbündel gebrochen ist, welches zweite Austrittsstrahlenbündel oberhalb der h-Achse gestreut ist, der auf die V-förmige Flanke des Strukturelements einfallende Teil des Strahlenbündels jeweils zu einem dritten und einem vierten Austrittsstrahlenbündel gebrochen ist, wobei die Austrittsstrahlenbündel in einen Bereich oberhalb der h-Achse gestreut sind und das dritte Austrittstrahlbündel und das vierte Austrittsstrahlenbündel im Streubild nicht überlappen.

Dabei ist es mit Vorteil vorgesehen, dass die V-förmige Flanke einen Anstieg in einem Bereich zwischen 8° und 20° oder einen Anstieg von ca. 18,9° aufweist und das dritte Austrittsstrahlenbündel in einen Bereich zwischen 3° und 7° vertikal und zwischen -12° und -7° horizontal gestreut ist und das vierte Austrittsstrahlenbündel in einen Bereich zwischen 3° und 7° vertikal und zwischen +7° und +12° horizontal gestreut ist.

Vorteilhaft ist, wenn die Strukturelemente ihren maximalen Abstand zu der Grundfläche im geometrischen Mittelpunkt ihrer Grundfläche aufweisen.

Um die Interferenzeffekte zu meiden, ist es vorteilhaft, wenn die Abmessung eines Strukturelementes, beispielsweise ein Umkreisdurchmesser und/oder der maximale Abstand zu der Grundfläche, größer, insbesondere sehr viel größer als die Wellenlänge von sichtbarem Licht ist.

Konkret kann dabei vorgesehen sein, dass der maximale Abstand zu der Grundfläche im Mikrometer-Bereich liegt.

Dabei ist es von Vorteil, wenn der maximale Abstand zu der Grundfläche im Bereich von 5 - 10 Mikrometer oder im Bereich von 10 - 13 Mikrometer oder im Bereich von 13 - 17 Mikrometer liegt oder ca. 9,3 Mikrometer oder ca. 10,6 Mikrometer oder ca. 12,15 Mikrometer oder ca. 16,6 Mikrometer beträgt.

Bei einer konkreten Ausführungsform ist vorgesehen, dass der Umkreisdurchmesser bzw. eine Länge der Strukturelemente im Millimeter-Bereich liegt.

Dabei kann vorteilhaft sein, wenn der Durchmesser bzw. eine Länge der Strukturelemente zwischen 0,5 - 2 Millimeter liegt oder ca. 1 Millimeter beträgt.

Vorzugsweise ist vorgesehen, dass die optische Struktur auf zumindest einer, vorzugsweise genau einer Grenzfläche eines Optikelementes, welches in Form einer Streu- oder einer Abdeckscheibe der Beleuchtungsvorrichtung ausgebildet ist, angeordnet ist.

Bei einer konkreten Ausführungsform kann vorgesehen sein, dass die optische Struktur auf zumindest einer Oberfläche eines Optikelementes in Form einer Linse, insbesondere einer Projektionslinse der Beleuchtungsvorrichtung angeordnet ist.

Darüber hinaus ist es von besonderem Vorteil, wenn die optische Struktur auf der Lichtaustrittsseite der Linse angeordnet ist.

Betrachtet man ein bestimmtes (unmodifiziertes) Lichtbündel aus dem gesamten Lichtstrom, so bildet dieses einen gewissen Beitrag zu der Lichtverteilung im Lichtbild (der gesamte Lichtstrom erzeugt die (Gesamt)-Lichtverteilung). Beispielsweise erzeugt das unmodifizierte Lichtbündel einen Lichtverteilungsbeitrag mit einer bestimmten Form, d.h. es werden bestimmte Bereiche auf der Fahrbahn oder auf einem Messschirm beleuchtet, andere Bereiche sind unbeleuchtet.

Bei einer konkreten Ausführungsform der Erfindung ist vorgesehen, dass die ersten Austrittsstrahlenbündel die erste unmodifizierte Lichtverteilung zu der zweiten modifizierten Lichtverteilung modifiziert, wodurch die zweite modifizierte Lichtverteilung einen geringeren Gradienten der HD-Grenze aufweist.

Dabei kann es zweckdienlich sein, wenn die weiteren Austrittsstrahlenbündel die erste unmodifizierte Lichtverteilung zu der zweiten modifizierten Lichtverteilung modifizieren und eine "Signlight"-Teillichtverteilung bilden.

Schließlich betrifft die Erfindung noch eine Beleuchtungsvorrichtung mit zumindest einer, vorzugsweise genau einer oben beschriebenen optischen Struktur.

Beispielsweise ist die Beleuchtungsvorrichtung ein Projektionssystem.

Vorzugsweise ist in diesem Fall vorgesehen, dass die Beleuchtungsvorrichtung zumindest eine Lichtquelle, zumindest einen Reflektor und zumindest eine Linse, insbesondere eine Projektionslinse umfasst.

Dabei kann es von Vorteil sein, wenn die zumindest eine optische Struktur auf der Linse angeordnet ist und/oder als ein zusätzliches Optikelement ausgebildet ist.

Es kann aber auch vorgesehen sein, dass die Beleuchtungsvorrichtung ein Reflexionssystem ist.

Dabei erweist sich als zweckmäßig, wenn die Beleuchtungsvorrichtung zumindest einen Freiform-Reflektor und zumindest eine Lichtquelle sowie zumindest eine Streu- und/oder zumindest eine Abdeckscheibe umfasst.

Dabei ist es vorteilhaft, wenn die zumindest eine optische Struktur auf der zumindest einen Streu- und/oder der zumindest einen Abdeckscheibe angeordnet ist und/oder als ein zusätzliches Optikelement ausgebildet ist.

Die vorliegende Erfindung wird nachfolgend anhand bevorzugter und nicht einschränkender Ausführungsbeispiele noch eingehender veranschaulicht, die Strukturelemente in drei Ausgestaltungen betreffen und in den beigefügten Zeichnungen dargestellt sind, welche zeigen:
Fig. 1 eine Seitenschnittansicht eines Ausführungsbeispiels eines Strukturelements mit einer geraden Flanke und auf dieses Element einfallendes Strahlenbündel, sowie drei Austrittsstrahlenbündel,
Fig. 2 ein Streubild des Strukturelements aus Fig. 1,
Fig. 3 eine Draufsicht eines Strukturelements mit einer ansteigenden Flanke mit einer sechseckigen Grundfläche,
Fig. 4 einen Seitenschnitt AA des Strukturelements aus Fig. 1,
Fig. 5 eine perspektivische Ansicht des Strukturelements aus Fig. 1,
Fig. 6 eine Draufsicht eines Strukturelements mit drei ansteigenden Flanken mit einer sechseckigen Grundfläche,
Fig. 7 einen Seitenschnitt BB des Strukturelements aus Fig. 4,
Fig. 8 eine perspektivische Ansicht des Strukturelements aus Fig. 4,
Fig. 9 ein Streubild des Strukturelements aus Fig. 4
Fig. 10 eine Draufsicht eines erfindungsgemäßen Strukturelements mit einer ansteigenden V-förmigen Flanke mit einer sechseckigen Grundfläche,
Fig. 11 einen Seitenschnitt CC des Strukturelements aus Fig. 10,
Fig. 12 eine perspektivische Ansicht des Strukturelements aus Fig. 10,
Fig. 13 ein Streubild des Strukturelements aus Fig. 10,
Fig. 14 ein sechseckiges regelmäßiges Gitter,
Fig. 15 eine Anordnung der Strukturelemente in jeder zweiten Reihe eines sechseckigen Gitters,
Fig. 16 eine schematische Darstellung eines Projektionsmoduls nach dem Stand der Technik,
Fig. 17 eine schematische Darstellung eines Reflexionsmoduls nach dem Stand der Technik,
Fig. 18 eine schematische Darstellung eines Projektionsmoduls mit einer erfindungsgemäßen optischen Struktur an der Außenseite einer Linse,
Fig. 19 eine schematische Darstellung eines Reflexionsmoduls mit einer erfindungsgemäßen optischen Struktur an der Außenseite einer Abdeck- oder Streuscheibe,
Fig. 20 eine schematische Darstellung eines Projektionsmoduls mit einer erfindungsgemäßen optischen Struktur auf einem zusätzlichen Optikelemente wie einer Scheibe,
Fig. 21 eine schematische Darstellung eines Reflexionsmoduls mit einer erfindungsgemäßen optischen Struktur auf einem zusätzlichen Optikelemente wie einer Scheibe,
Fig. 22 eine unmodifizierte Abblendlichtverteilung, und
Fig. 23 eine modifizierte Abblendlichtverteilung.

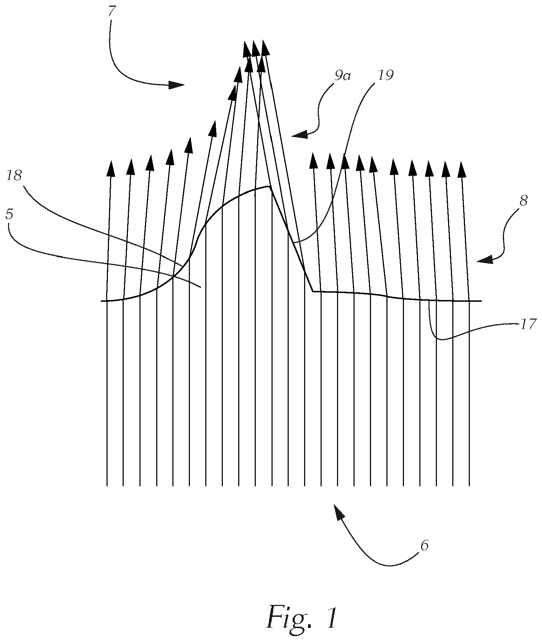

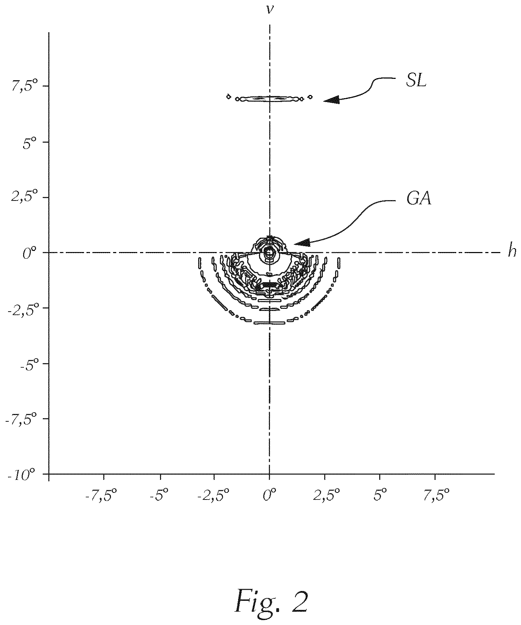

Zunächst wird auf die Fig. 1 Bezug genommen, welche eine Seitenansicht eines Strukturelements 5 mit einem Anstiegsbereich 17, einem Auslaufbereich 18 und einer Flanke 19a zeigt. Ein einfallendes von einer hier nicht gezeigten Beleuchtung abgestrahltes Lichtbündel 6 tritt durch das Strukturelement durch und wird beim Austreten unterschiedlich gebrochen, je nachdem ob der durchtretende Anteil des Strahlenbündels 6 am Anstiegsbereich 17, am Auslaufbereich 18 oder an der Flanke 19a austritt. Dabei werden insgesamt drei unterschiedliche im Streubild nicht überlagernde Strahlenbündel 7, 8, 9a gebildet. Das entstehende Streubild ist in Fig. 2 gezeigt, welche ein Streubild des Strukturelements 5 mit der Flanke 19a darstellt. Dabei trägt das Strahlenbündel 7 zur Aufweichung des Gradienten (Bereich GA in Fig. 2) der modifizierten zweiten Lichtverteilung bei, wobei durch das Strahlenbündel 9a das oben beschriebene Signlight realisiert wird (Bereich SL in Fig. 2).

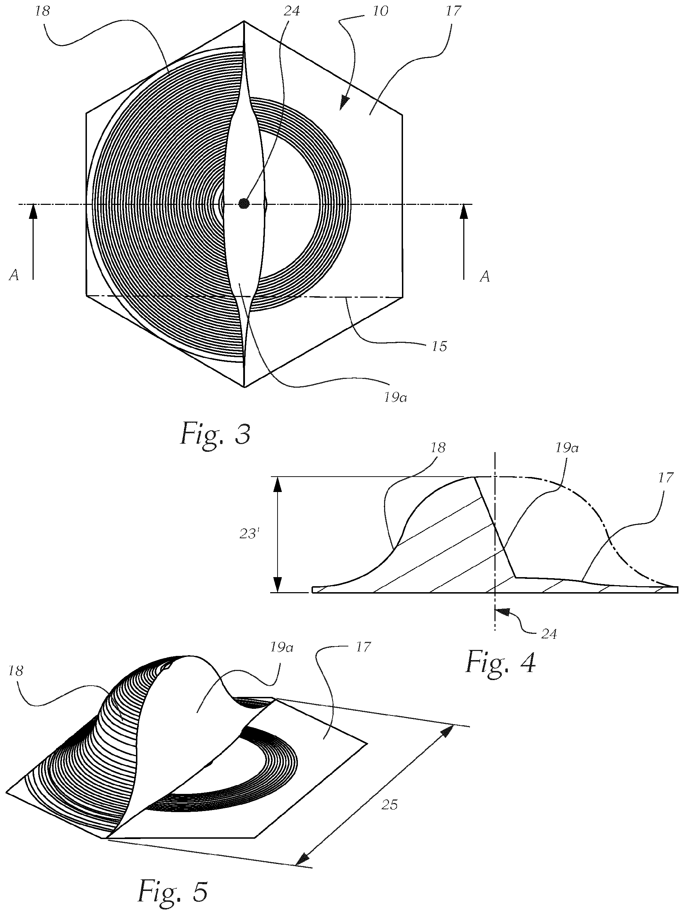

Das Strukturelement 5 der Fig. 1 ist aus verschiedenen Perspektiven in Fig. 3 - Fig. 5 dargestellt. So zeigt die Fig. 3 eine Draufsicht des Strukturelements 5 mit einer ansteigenden Flanke 19a mit einer sechseckigen Grundfläche 10. Das Strukturelement 5 ist in Bezug auf die durch einen geometrischen Mittelpunkt 24 des Strukturelements 5 und parallel zu einer Diagonale über zwei Seiten 15 der sechseckigen Grundfläche 10 verlaufende Linie AA spiegelsymmetrisch ausgebildet. Ein Seitenschnitt entlang der Linie AA in Fig. 3 des Strukturelements 5 ist in Fig. 4 zu sehen, wobei ersichtlich ist, dass der Anstiegsbereich 17 linear und der Auslaufbereich 18 im Wesentlichen S-förmig, vorzugsweise einer cos-Funktion ähnlich verlaufen. Fig. 5 zeigt eine perspektivische Ansicht des Strukturelements aus Fig. 3.

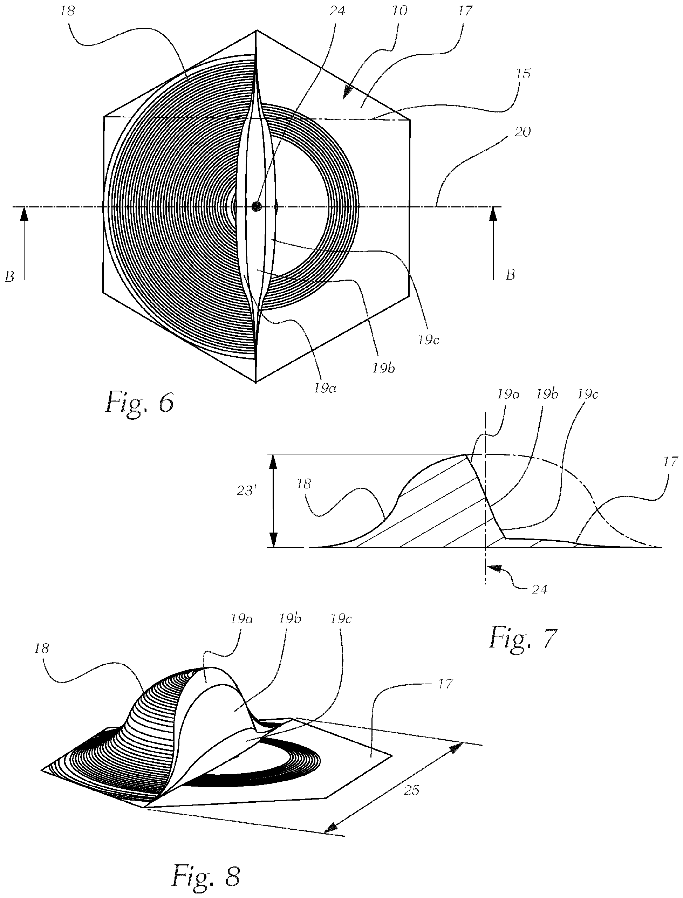

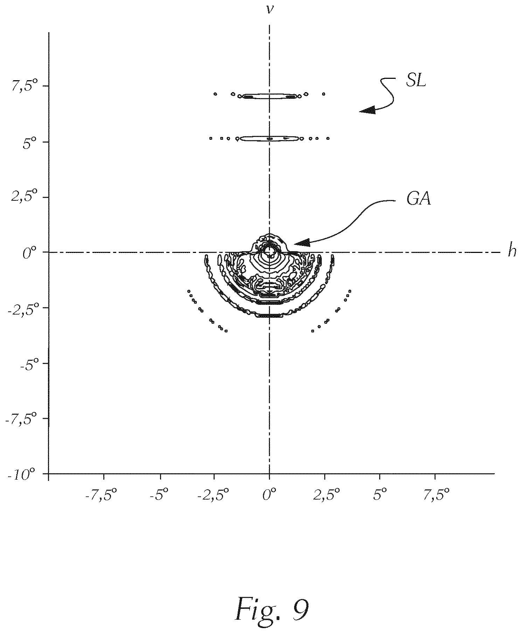

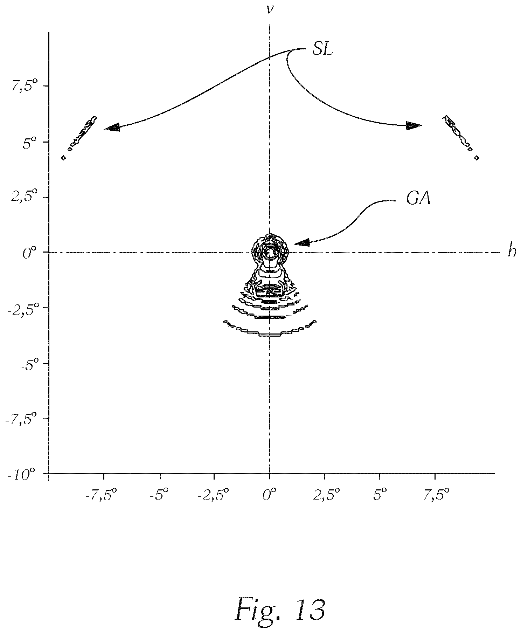

Figuren 6 - 13 betreffen zwei weitere Ausführungsformen des Strukturelements 5 und die dazugehörige Streubilder (Fig. 9 und Fig. 13).

Fig. 6 zeigt eine Draufsicht eines Strukturelements 5 mit drei ansteigenden Flanken 19a, 19b, 19c mit einer sechseckigen Grundfläche 10. Dabei werden beim durchtreten eines einfallenden Strahlenbündels fünf verschiedene Strahlenbündel gebildet. Die Anstiegswinkel der Flanken 19a und 19c sind gleich und von dem Anstiegswinkel der Flanke 19b verschieden. Das hat zu Folge, dass das Strahlenbündel, das an der Flanke 19a austritt, das an der Flanke 19c austretende Strahlenbündel 19c im Streubild überlagert, was aus dem in Fig. 9 dargestellten Streubild ersichtlich ist, in dem der Licht-Beitrag zum Signlight Bereich SL zwei Segmente statt drei umfasst. Fig. 7 zeigt einen Seitenschnitt BB des Strukturelements aus Fig. 6, wobei die unterschiedlichen Anstiegswinkel der Flanken verdeutlicht werden. Fig. 8 zeigt eine perspektivische Ansicht des Strukturelements aus Fig. 6.

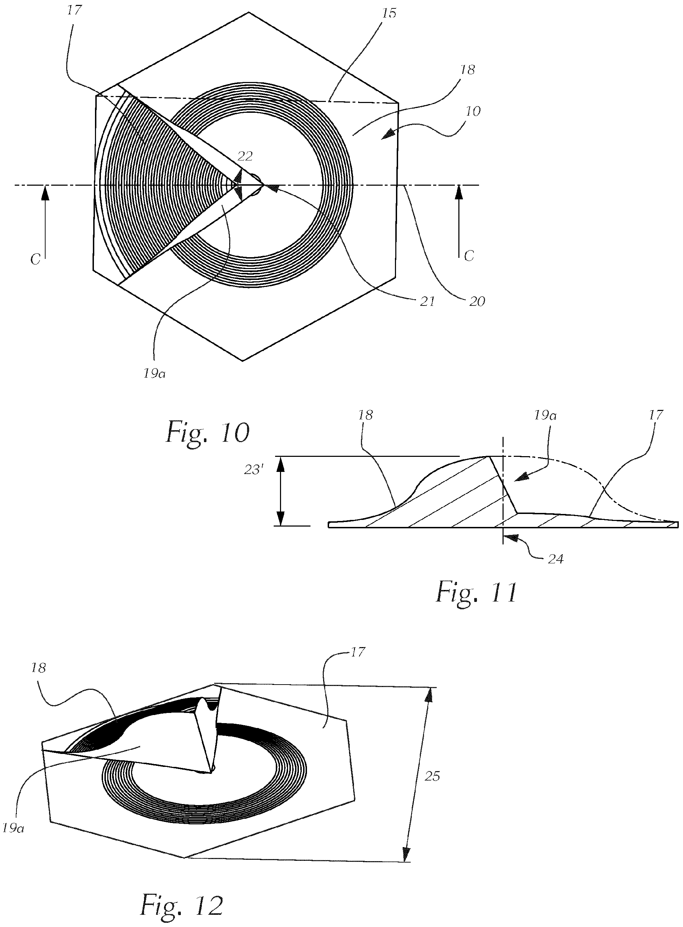

Fig. 10 zeigt eine Draufsicht eines erfindungsgemäßen Strukturelements mit einer ansteigenden V-förmigen Flanke 19a mit einer sechseckigen Grundfläche 10. Dabei schließt die V-förmige Flanke 19a einen Öffnungswinkel 22 ein und ist dergestalt ausgebildet, dass ihr Eckpunkt 21 im geometrischen Mittelpunkt 21 des Strukturelements 5, der dem geometrischen Mittelpunkt der sechseckigen Grundfläche 10 gleicht, liegt. Durch die V-Form der Flanke 19a werden beim Austreten des einfallenden Strahlenbündels 6 insgesamt vier in verschiedene räumliche Richtungen ausbreitende Austrittsstrahlenbündel gebildet, welche im Streubild nicht überlagern. Der Licht-Beitrag zum Signlight-Bereich SL in Fig. 13 besteht im Wesentlichen aus zwei zur h-Achse geneigten länglichen Segmenten. Der Licht-Beitrag zur Gradientenaufweichung GA ist bei dieser Ausführungsform des Strukturelements größer. Fig. 11 zeigt einen Seitenschnitt CC des Strukturelements aus Fig. 10. Fig. 12 zeigt eine perspektivische Ansicht des Strukturelements aus Fig. 10.

Alle Ausführungsformen der Strukturelemente verfügen über charakteristische Größen, wie z.B. der maximale Abstand 23 des Strukturelements 5 zur Grundfläche 10 und der Umkreisdurchmesser 25. Diese Größen liegen jeweils im Mikro- bzw. Millimeter Bereich und sind im Vergleich zu den typischen Wellenlängen des von der Beleuchtungsvorrichtung abgestrahlten Lichts groß genug, damit keine Interferenzeffekte auftreten.

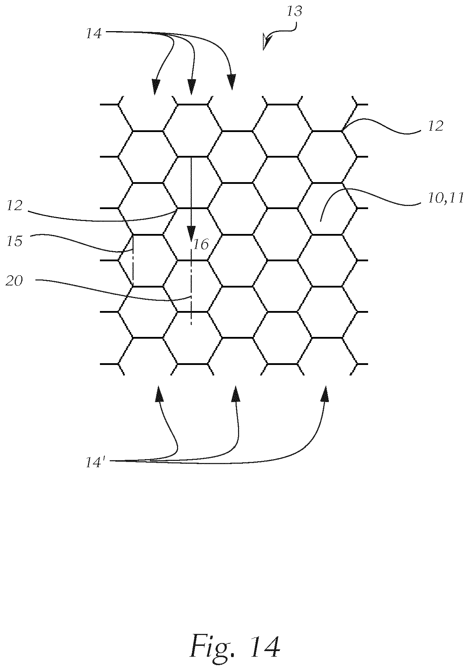

Alle Strukturelemente bedecken ein sechseckiges Gitter 13, welches in Fig. 14 dargestellt ist. Das Gitter 13 in Fig. 14 ist ein regelmäßiges sechseckiges Gitter, obwohl Abweichungen von der Regelmäßigkeit des Gitters durchaus denkbar sind. Die Grundflächen 10 der Strukturelemente 5, 5' bedecken die Flächen 11 zwischen den Eckpunkten 12 des Gitters 13 vollständig, wobei jede Fläche 11 von der Grundfläche 10 von genau einem Strukturelement 5, 5' bedeckt ist. Weiterhin kann das Gitter in mehrere parallel verlaufende Reihen 14 unterteilt werden. Eine solche Reihe 14 besteht aus mehreren benachbarten Flächen 11 und verläuft in eine durch eine Diagonale über zwei Seiten 15 einer Fläche 11 definierten Richtung 16.

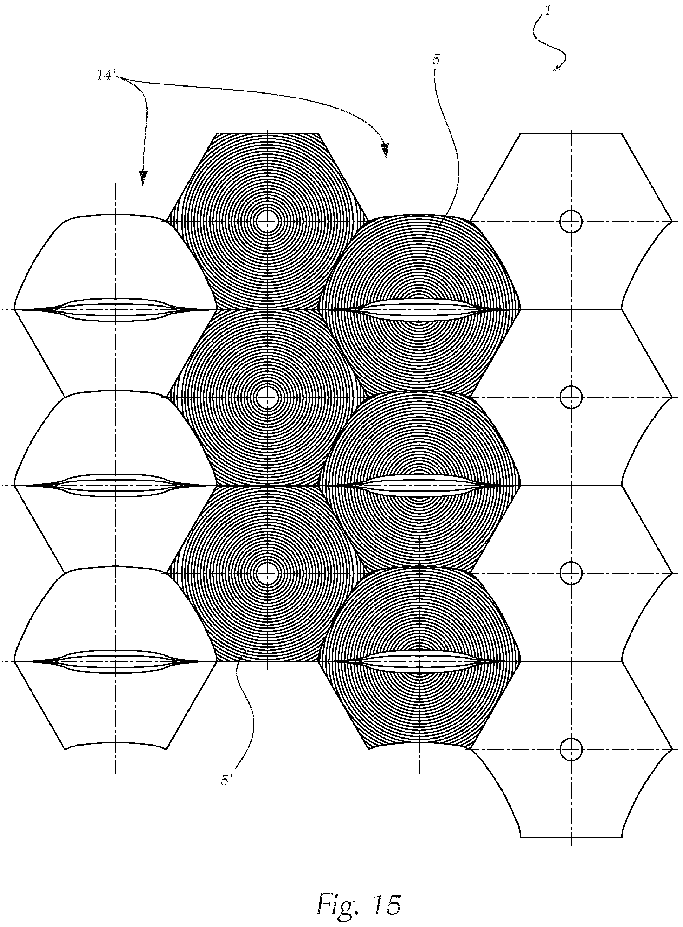

Fig. 15 zeigt ein Ausführungsbeispiel einer optischen Struktur, bei welcher die Grundflächen 10 der Strukturelemente 5 jede zweite Reihe 14' des sechseckigen Gitters 13 bedecken und die Grundflächen der restlichen Strukturelemente 5' die übrig gebliebenen Flächen des sechseckigen Gitters 13 bedecken.

Im Weiteren wird auf die Anordnungsmöglichkeiten der aus Strukturelementen 5, 5' gebildeten optischen Struktur 1 in einer Beleuchtungsvorrichtung 2 eingegangen.

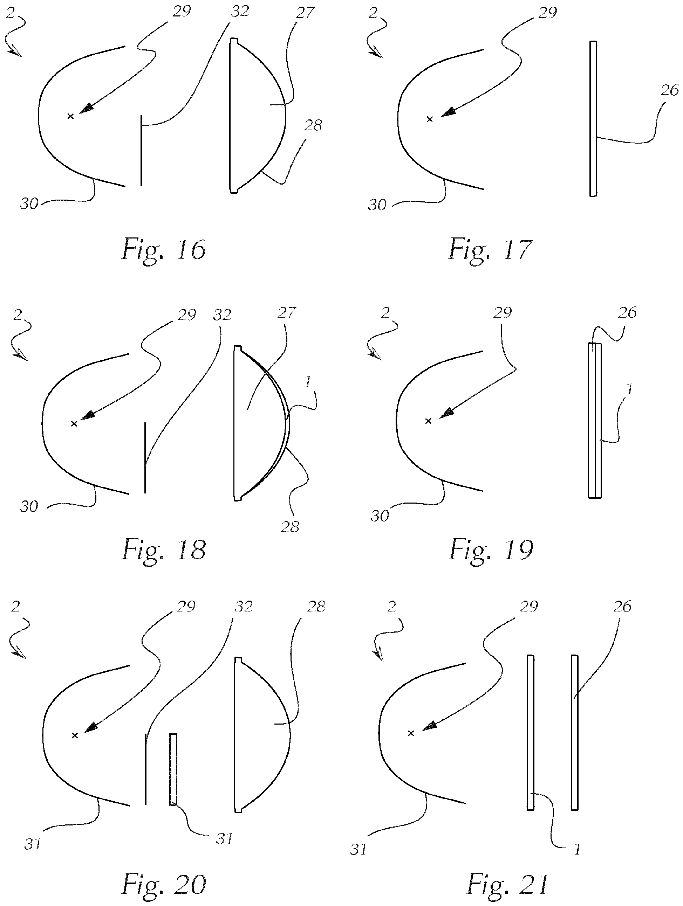

Fig. 16 zeigt schematisch eine Beleuchtungsvorrichtung 2 in Form eines Projektionssystems, mit einem Reflektor 30, einer Lichtquelle 29, einer (optionalen) Blendenanordnung 32 und einer Projektionslinse 27, mit einer gekrümmte Außenseite 28 und einer Ebenen Innenseite.

Fig. 17 zeigt schematisch eine Beleuchtungsvorrichtung 2 in Form eines Reflexionssystems, mit einem Reflektor 30, einer Lichtquelle 29 und einer Streu- bzw. Abdeckscheibe 26.

Fig. 18 zeigt eine schematische Darstellung des Projektionssystems aus Figur 16, wobei eine erfindungsgemäße optische Struktur 1 an der Außenseite 28 einer Linse 27 angeordnet ist. Diese optische Struktur 1 nimmt dabei vorzugsweise die gesamte Außenseite 28 der Linse 29 ein.

Fig. 19 zeigt eine schematische Darstellung des Reflexionsmoduls aus Figur 17 mit einer erfindungsgemäßen optischen Struktur 1 an der Außenseite der Abdeck- bzw. Streuscheibe 26, wobei vorzugsweise die optische Struktur die gesamte Außenseite der Scheibe 26 einnimmt.

Fig. 20 zeigt nochmals eine schematische Darstellung eines Projektionsmoduls, wie in Figur 16 dargestellt, mit einer erfindungsgemäßen optischen Struktur 1 auf einem zusätzlichen Optikelement 31 wie einer Scheibe, wobei das Optikelement 31 zwischen der Blende 32 und der Linse 28 angeordnet ist.

Fig. 21 zeigt schließlich noch eine schematische Darstellung eines Reflexionsmoduls aus Figur 17 mit einer erfindungsgemäßen optischen Struktur 1 auf einem zusätzlichen Optikelemente 31 wie einer Scheibe, welche zwischen der Lichtquelle 29 und der Streu- bzw. Abdeckscheibe 26 angeordnet ist.

Diese Darstellungen dienen lediglich zur Veranschaulichung einiger der Möglichkeiten der Anordnung einer erfindungsgemäßen optischen Struktur 1. Grundsätzlich kann eine Beleuchtungsvorrichtung auch über mehrere Lichtquellen, beispielsweise über LEDs als Lichtquellen verfügen, und der Licht formende Körper kann in Form von einem oder mehreren Lichtleitern, Reflektoren, usw. ausgebildet sein.

Generell gilt, dass die optische Struktur 1 der Beleuchtungsvorrichtung 2 derart zugeordnet oder derart Teil der Beleuchtungsvorrichtung 2 ist, dass die optische Struktur 1 von zumindest einem Teil des gesamten Lichtstroms der Beleuchtungsvorrichtung 2, vorzugsweise vom gesamten optisch relevanten Lichtstrom durchstrahlt wird. Insbesondere ist es von Vorteil, wenn die optische Struktur derart angeordnet und/oder ausgebildet ist, dass sie homogen ausgeleuchtet ist.

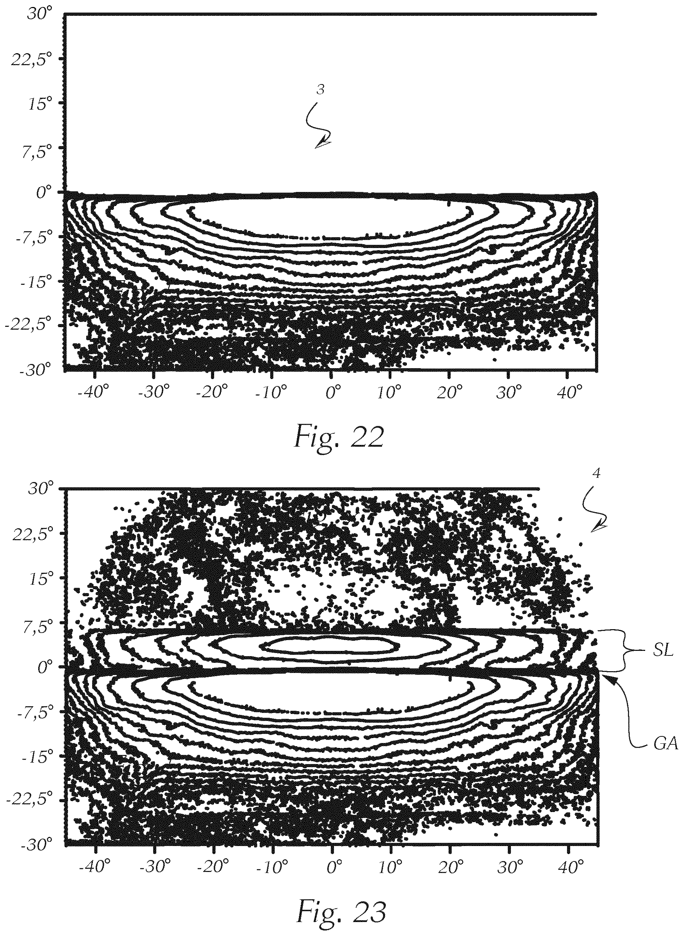

Abschließend zeigen die Fig. 22 und 23 die erste unmodifizierte Lichtverteilung 3 und die zweite modifizierte Lichtverteilung 4. Dabei ist die erste unmodifizierte Lichtverteilung in Fig. 22 als eine Abblendlichtverteilung 3 mit einer linearen HD-Grenze dargestellt. Die zweite modifizierte Lichtverteilung 4 in Fig. 23 ist eine Modifizierung der ersten Lichtverteilung 3 und umfasst zwei zusätzliche durch die Anwendung der erfindungsgemäßen optischen Struktur entstehende Bereiche: den Bereich der Gradientenaufweichung GA und den Signlight-Bereich SL.

In Figur 23 ist zu erkennen, dass der Bereich SL oberhalb einer HD-Grenze mit einer gewissen Beleuchtungsstärke beleuchtet wird, um ein Signlight zu erzeugen. Dabei wird ein Anteil des Lichtstroms der Beleuchtungsvorrichtung 2 in diesen Bereich SL, also oberhalb der HD-Grenze, abgebildet. Auf diese Weise kann mit der erfindungsgemäßen optischen Struktur 1 auf optimale Weise ein eingangs beschriebenes Signlight erzeugt werden.

Die HD-Grenze weist einen geringeren Gradienten als die HD-Grenze der unmodifizierten Lichtverteilung auf, wie dies durch den größeren Abstand der Isolux-Linien im Bereich der Hell-Dunkel-Grenze schematisch angedeutet ist. Die HD-Grenze der zweiten modifizierten Lichtverteilung 4 ist somit "weicher".

## Patentansprüche

1. Optische Struktur für eine Beleuchtungsvorrichtung (2) eines Kraftfahrzeugscheinwerfers, welche Beleuchtungsvorrichtung (2) zur Abstrahlung von Licht zur Bildung einer ersten unmodifizierten Lichtverteilung (3) in einem Bereich vor der Beleuchtungsvorrichtung (2) eingerichtet ist, wobei die optische Struktur (1) der Beleuchtungsvorrichtung (2) derart zugeordnet oder derart Teil der Beleuchtungsvorrichtung (2) ist, dass die optische Struktur (1) von zumindest einem Teil des gesamten Lichtstrom der Beleuchtungsvorrichtung (2) durchstrahlt wird, wobei die - von der Beleuchtungsvorrichtung (2) erzeugte, unmodifizierte Lichtverteilung (3) - von der optischen Struktur (1) zu einer vorgebbaren, modifizierten zweiten Lichtverteilung (4) modifiziert ist, wobei die optische Struktur (1) aus zwei, drei oder mehreren optischen Strukturelementen (5, 5') besteht, wobei jedes Strukturelement (5, 5') eine Licht streuende Wirkung aufweist und eine erste Teilmenge der Strukturelemente (5) derart ausgebildet ist, dass auf diese erste Teilmenge der Strukturelemente (5) eintreffende, von der Beleuchtungsvorrichtung (2) erzeugte Strahlenbündel (6) durch die erste Teilmenge der Strukturelemente (5) durchtreten, wobei jedes Strahlenbündel (6) von dem jeweiligen Strukturelement (5) zu einem ersten Austrittsstrahlenbündel (7), zu einem zweiten Austrittsstrahlenbündel (8) und zu zumindest einem weiteren Austrittstrahlenbündel (9a, 9b, 9c) gebrochen ist, **dadurch gekennzeichnet, dass** die erste Teilmenge der Strukturelemente (5) zumindest einen Anstiegsbereich (17), einen Auslaufbereich (18) und zumindest eine ansteigende Flanke (19a, 19b, 19c) aufweist, wobei der Anstiegsbereich (17) das auf das jeweilige Strukturelement (5) eintreffende, von der Beleuchtungsvorrichtung (2) erzeugte Strahlenbündel (6) zu dem ersten Austrittsstrahlenbündel (7), der Auslaufbereich (18) das auf das jeweilige Strukturelement (5) eintreffende, von der Beleuchtungsvorrichtung (2) erzeugte Strahlenbündel (6) zu dem zweiten Austrittsstrahlenbündel (8), und die zumindest eine ansteigende Flanke (19a, 19b, 19c) das auf das jeweilige Strukturelement (5) eintreffende, von der Beleuchtungsvorrichtung (2) erzeugte Strahlenbündel (6) zu zumindest einem weiteren Austrittsstrahlenbündel (9a, 9b, 9c) brechen, wobei die zumindest eine ansteigende Flanke (19a) in einem Schnitt durch das Strukturelement (5) entlang einer zu einer sechseckigen Grundfläche (10) des Strukturelements (5) parallelen Ebene im Wesentlichen V-förmig ausgebildet ist.

2. Optische Struktur nach Anspruch 1, **dadurch gekennzeichnet, dass** zumindest zwei von den Austrittsstrahlenbündeln (7, 8, 9a, 9b, 9c) im Streubild nicht überlagern.

3. Optische Struktur nach Anspruch 1 oder 2, **dadurch gekennzeichnet, dass** eine zweite Teilmenge der Strukturelemente (5') derart ausgebildet ist, dass das auf diese zweite Teilmenge der Strukturelemente (5') eintreffende Licht in Form von genau einem Strahlenbündel gestreut ist.

4. Optische Struktur nach einem der Ansprüche 1 bis 3, **dadurch gekennzeichnet, dass** die Strukturelemente (5, 5') eine regelmäßige sechseckige Grundfläche (10) aufweisen, d.h., dass die Grundflächen (10) der Strukturelemente (5, 5') ein regelmäßiges sechseckiges Gitter (13) vollständig bedecken und die Flächen (11) zwischen den Eckpunkten (12) des Gitters (13) von der Grundfläche (10) von genau einem Strukturelement (5, 5') bedeckt sind.

5. Optische Struktur nach Anspruch 4, **dadurch gekennzeichnet, dass** das regelmäßige sechseckige Gitter (13) eine, zwei oder mehrere parallel verlaufenden Reihen (14) aufweist, welche Reihen (14) parallel zu einer durch eine Diagonale über zwei Seiten (15) einer der Flächen (11) definierten Richtung (16) verlaufen, wobei die als regelmäßige Sechsecke ausgebildeten Grundflächen (10) der ersten Teilmenge der Strukturelemente (5) jede zweite Reihe (14') bedecken.

6. Optische Struktur nach einem der Ansprüche 1 bis 5, **dadurch gekennzeichnet, dass** der Anstiegsbereich (17) in die zumindest eine ansteigende Flanke (19a, 19b, 19c) stetig übergeht und/oder die zumindest eine ansteigende Flanke (19a, 19b, 19c) in den Auslaufbereich (18) stetig übergeht.

7. Optische Struktur nach einem der Ansprüche 1 bis 6, **dadurch gekennzeichnet, dass** die Strukturelemente (5) jeweils in Bezug auf eine durch einen geometrischen Mittelpunkt (24) des Strukturelements (5) parallel zu der Diagonale über zwei Seiten (15) verlaufende Achse (20) symmetrisch, insbesondere spiegelsymmetrisch ausgebildet sind.

8. Optische Struktur nach einem der Ansprüche 1 bis 7, **dadurch gekennzeichnet, dass** die zumindest eine ansteigende Flanke (19a) in einem Schnitt durch das Strukturelement (5) entlang einer zu der Grundfläche (10) parallelen Ebene im in Bezug auf eine durch den geometrischen Mittelpunkt (24) des Strukturelements (5) parallel zu der Diagonale über zwei Seiten (15) verlaufende Achse (20) symmetrisch, insbesondere spiegelsymmetrisch ausgebildet ist und einen Eckpunkt (21) und einen Öffnungswinkel (22) aufweist.

9. Optische Struktur nach Anspruch 8, **dadurch gekennzeichnet, dass** der Öffnungswinkel (22) vorzugsweise in einem Bereich zwischen 2° und 180° oder zwischen 10° und 180° oder zwischen 20° und 180° oder zwischen 30° und 180° oder zwischen 40° und 180° oder zwischen 50° und 180° oder zwischen 60° und 180° oder zwischen 70° und 180° oder zwischen 80° und 180° oder zwischen 90° und 180° oder zwischen 100° und 180° oder zwischen 110° und 180° oder zwischen 120° und 180° oder zwischen 130° und 180° oder zwischen 140° und 180° oder zwischen 150° und 180° oder zwischen 160° und 180° oder zwischen 170° und 180° liegt.

10. Optische Struktur nach einem der Ansprüche 1 bis 9, **dadurch gekennzeichnet, dass** die Strukturelemente (5) einen Anstiegsbereich (17), einen Auslaufbereich (18) und genau eine ansteigende Flanke (19a) aufweisen, wobei der auf den Anstiegsbereich (17) des Strukturelements einfallende Teil des Strahlenbündels (6) zu einem ersten Austrittsstrahlenbündel (7) gebrochen ist, welches erste Austrittsstrahlenbündel (7) unterhalb der h-Achse gestreut ist, der auf den Auslaufbereich (18) des Strukturelements einfallende Teil des Strahlenbündels (6) zu einem zweiten Austrittsstrahlenbündel (8) gebrochen ist, welches zweite Austrittsstrahlenbündel (8) oberhalb der h-Achse gestreut ist, der auf die Flanke (19a) des Strukturelements einfallende Teil des Strahlenbündels (6) zu einem dritten Austrittsstrahlenbündel (9a) gebrochen ist, welches dritte Austrittsstrahlenbündel (9a) oberhalb der h-Achse gestreut ist und das zweite Austrittsstrahlenbündel (8) vorzugsweise in einen Bereich zwischen 0° und 3° oberhalb der h-Achse gestreut ist, und die Flanke (19a) vorzugsweise einen Anstieg in einem Bereich zwischen 5° und 20° oder einen Anstieg von ca. 13,8° bzw. 18,9° aufweist und das dritte Austrittsstrahlenbündel (9a) vorzugsweise in einen Bereich zwischen 2° und 4° oder zwischen 4° und 5° oder zwischen 5° und 7° oberhalb der h-Achse gestreut ist.

11. Optische Struktur nach einem der Ansprüche 1 bis 9, **dadurch gekennzeichnet, dass** die Strukturelemente (5) einen Anstiegsbereich (17), einen Auslaufbereich (18) und genau drei ansteigenden Flanken (19a, 19b, 19c) aufweisen, wobei der auf den Anstiegsbereich (17) des Strukturelements einfallende Teil des Strahlenbündels (6) zu einem ersten Austrittsstrahlenbündel (7) gebrochen ist, welches erste Austrittsstrahlenbündel (7) unterhalb der h-Achse gestreut ist, der auf den Auslaufbereich (18) des Strukturelements einfallende Teil des Strahlenbündels (6) zu einem zweiten Austrittsstrahlenbündel (8) gebrochen ist, welches zweite Austrittsstrahlenbündel (8) oberhalb der h-Achse gestreut ist, der auf die Flanken (19a, 19b, 19c) des Strukturelements einfallende Teil des Strahlenbündels (6) jeweils zu einem dritten, einem vierten und einem fünften Austrittsstrahlenbündel (9a, 9b, 9c) gebrochen ist, wobei die Austrittsstrahlenbündel (9a, 9b, 9c) in einen Bereich oberhalb der h-Achse gestreut sind und das vierte Austrittstrahlbündel (9b) weder das dritte Austrittsstrahlenbündel (9a) noch das fünfte Austrittsstrahlenbündel (9c) im Streubild überlappt, und das zweite Austrittsstrahlenbündel (8) vorzugsweise in einen Bereich zwischen 0° und 3° oberhalb der h-Achse gestreut ist, und die erste und die dritte Flanke (9a, 9c) vorzugsweise einen Anstieg in einem Bereich zwischen 8° und 12° oder einen Anstieg von ca. 10° aufweisen und die zweite Flanke (9b) einen Anstieg in einem Bereich zwischen 12° und 16° oder einen Anstieg von ca. 14° aufweist und das dritte und das fünfte Austrittsstrahlenbündel (9a, 9c) vorzugsweise in einen Bereich zwischen 4° und 6° oberhalb der h-Achse gestreut sind und das vierte Austrittsstrahlenbündel (9b) in einen Bereich zwischen 6° und 8° oberhalb der h-Achse gestreut ist.

12. Optische Struktur nach einem der Ansprüche 1 bis 9, **dadurch gekennzeichnet, dass** die V-förmige Flanke (19a) einen Eckpunkt (21) und einen Öffnungswinkel (22) aufweist, wobei der Eckpunkt (21) im geometrischen Mittelpunkt (24) ihrer Grundfläche (10) liegt, wobei der auf den Anstiegsbereich (17) des Strukturelements einfallende Teil des Strahlenbündels (6) zu einem ersten Austrittsstrahlenbündel (7) gebrochen ist, welches erste Austrittsstrahlenbündel (7) unterhalb der h-Achse gestreut ist, der auf den Auslaufbereich (18) des Strukturelements einfallende Teil des Strahlenbündels (6) zu einem zweiten Austrittsstrahlenbündel (8) gebrochen ist, welches zweite Austrittsstrahlenbündel (8) oberhalb der h-Achse gestreut ist, der auf die V-förmige Flanke (19a) des Strukturelements einfallende Teil des Strahlenbündels (6) jeweils zu einem dritten und einem vierten Austrittsstrahlenbündel (9a, 9b) gebrochen ist, wobei die Austrittsstrahlenbündel (9a, 9b) in einen Bereich oberhalb der h-Achse gestreut sind und das dritte Austrittstrahlbündel (9a) und das vierte Austrittsstrahlenbündel (9b) im Streubild nicht überlappen, welche V-förmige Flanke (19a) vorzugsweise einen Anstieg in einem Bereich zwischen 8° und 20° oder einen Anstieg von ca. 18,9° aufweist und/oder das dritte Austrittsstrahlenbündel (9a) in einen Bereich zwischen 3° und 7° vertikal und zwischen -12° und -7° horizontal gestreut ist und/oder das vierte Austrittsstrahlenbündel (9b) in einen Bereich zwischen 3° und 7° vertikal und zwischen +7° und +12° horizontal gestreut ist.

13. Optische Struktur nach einem der Ansprüche 1 bis 12, **dadurch gekennzeichnet, dass** die Abmessung eines Strukturelementes (5), beispielsweise ein Umkreisdurchmesser (25) und/oder der maximale Abstand (23) zu der Grundfläche (10), größer, insbesondere sehr viel größer als die Wellenlänge von sichtbarem Licht ist.

14. Optische Struktur nach einem der Ansprüche 1 bis 13, **dadurch gekennzeichnet, dass** sie auf zumindest einer, vorzugsweise genau einer Grenzfläche eines Optikelementes, welches in Form einer Streu- oder einer Abdeckscheibe (26) der Beleuchtungsvorrichtung (2) ausgebildet ist, angeordnet ist und/oder auf zumindest einer Oberfläche eines Optikelementes in Form einer Linse (27), insbesondere einer Projektionslinse der Beleuchtungsvorrichtung (2) angeordnet ist und/oder auf der Lichtaustrittsseite (28) der Linse (27) angeordnet ist.

15. Optische Struktur nach einem der Ansprüche 1 bis 14, **dadurch gekennzeichnet, dass** die ersten Austrittsstrahlenbündel (7) die erste unmodifizierte Lichtverteilung (3) zu der zweiten modifizierten Lichtverteilung (4) dergestalt modifizieren, dass die zweite modifizierte Lichtverteilung (4) einen geringeren Gradienten der HD-Grenze aufweist, und die weiteren Austrittsstrahlenbündel (9a, 9b, 9c) die erste unmodifizierte Lichtverteilung (3) zu der zweiten modifizierten Lichtverteilung (4) modifizieren und eine "Signlight"-Teillichtverteilung bilden.

16. Beleuchtungsvorrichtung mit zumindest einer, vorzugsweise genau einer optischen Struktur (1) nach einem der Ansprüche 1 bis 15.

17. Beleuchtungsvorrichtung nach Anspruch 16, **dadurch gekennzeichnet, dass** die Beleuchtungsvorrichtung (2) ein Projektionssystem ist, welche Beleuchtungsvorrichtung (2) vorzugsweise zumindest eine Lichtquelle (29), zumindest einen Reflektor (30) und zumindest eine Linse (27), insbesondere eine Projektionslinse umfasst, und die zumindest eine optische Struktur (1) vorzugsweise auf der Linse (27) angeordnet ist und/oder als ein zusätzliches Optikelement (31) ausgebildet ist.

18. Beleuchtungsvorrichtung nach Anspruch 17, **dadurch gekennzeichnet, dass** die Beleuchtungsvorrichtung (2) ein Reflexionssystem ist, welche Beleuchtungsvorrichtung (2) vorzugsweise zumindest einen Freiform-Reflektor (30) und zumindest eine Lichtquelle (29) sowie zumindest eine Streu- und/oder zumindest eine Abdeckscheibe (26) umfasst und die zumindest eine optische Struktur (1) vorzugsweise auf der zumindest einen Streu- und/oder der zumindest einen Abdeckscheibe (26) angeordnet ist und/oder als ein zusätzliches Optikelement (31) ausgebildet ist.

19. Fahrzeugscheinwerfer mit zumindest einer Beleuchtungsvorrichtung nach einem der Ansprüche 16 bis 18.

## Claims

1. An optical structure for a lighting device (2) of a motor vehicle headlamp, said lighting device (2) being configured to emit light for generating a first unmodified light distribution (3) in a region in front of the lighting device (2), wherein the optical structure (1) is associated with the lighting device (2) or is part of the lighting device (2) in such a way that the optical structure (1) is traversed by at least a part of the total luminous flux of the lighting device (2), wherein the unmodified light distribution (3) - as generated by the lighting device (2) - is modified by the optical structure (1) into a predeterminable, modified, second light distribution (4), wherein the optical structure (1) consists of two, three or more optical structural elements (5, 5'), wherein each structural element (5, 5') includes a light-scattering effect and a first subset of the structural elements (5) is designed such that beams (6) incident on said first subset of the structural elements (5) and generated by the illumination device (2) pass through said first subset of the structural elements (5), each beam (6) being refracted by the respective structural element (5) into a first exit beam (7), into a second exit beam (8) and into at least one further exit beam (9a, 9b, 9c), **characterised in that** the first subset of the structural elements (5) has at least one rising portion (17), a fading portion (18), and at least one rising flank (19a, 19b, 19c), wherein the rising portion (17) refracts the beam (6) incident on the respective structural element (5) and generated by the illumination device (2) towards the first outlet beam (7), the fading portion (18) refracts the beam (6) incident on the respective structural element (5) and generated by the lighting device (2) towards the second outlet beam (8), and the at least one rising flank (19a, 19b, 19c) refracts the beam (6) incident on the respective structural element (5) and generated by the lighting device (2) towards at least one further exit beam (9a, 9b, 9c), wherein the at least one rising flank (19a) is substantially V-shaped in a section extending through the structural element (5) along a plane parallel to a hexagonal base surface (10) of the structural element (5).

2. Optical structure according to claim 1, **characterised in that** at least two of the exit beams (7, 8, 9a, 9b, 9c) do not overlap in the scattering pattern.

3. Optical structure according to claim 1 or 2, **characterised in that** a second subset of the structural elements (5') is formed such that the light incident on said second subset of the structural elements (5') is scattered to form exactly one beam.

4. Optical structure according to any one of claims 1 to 3, **characterised in that** the structural elements (5, 5') have a regular hexagonal base surface (10), that is, the base surfaces (10) of the structural elements (5, 5') completely cover a regular hexagonal lattice (13) and the areas (11) between the vertices (12) of the lattice (13) are covered by the base surface (10) of exactly one structural element (5, 5').

5. Optical structure according to claim 4, **characterised in that** the regular hexagonal lattice (13) has one, two or more parallel rows (14), said rows (14) extending parallel to a direction (16) defined by a diagonal across two sides (15) of one of the areas (11), wherein the base surfaces (10) of the first subset of the structural elements (5), which are formed as regular hexagons, cover every other row (14').

6. Optical structure according to any one of claims 1 to 5, **characterised in that** the rising portion (17) merges continuously into the at least one rising flank (19a, 19b, 19c) and/or the at least one rising flank (19a, 19b, 19c) merges continuously into the fading portion (18).

7. Optical structure according to any one of claims 1 to 6, **characterised in that** the structural elements (5) are each symmetrical, in particular mirror-symmetrical, with respect to an axis (20) extending through a geometric centre (24) of the structural element (5) parallel to the diagonal over two sides (15).

8. Optical structure according to any one of claims 1 to 7, **characterised in that** the at least one rising flank (19a), in a section extending through the structural element (5) along a plane parallel to the base surface (10), is symmetrical, in particular mirror-symmetrical with respect to an axis (20) extending through the geometric centre (24) of the structural element (5) parallel to the diagonal over two sides (15), and has a corner point (21) and an aperture angle (22).

9. The optical structure according to claim 8, **characterised in that** that the opening angle (22) is preferably in a range between 2° and 180° or between 10° and 180° or between 20° and 180° or between 30° and 180° or between 40° and 180° or between 50° and 180° or between 60° and 180° or between 70° and 180° or is between 80° and 180° or between 90° and 180° or between 100° and 180° or between 110° and 180° or between 120° and 180° or between 130° and 180° or between 140° and 180° or between 150° and 180° or between 160° and 180° or between 170° and 180°.

10. Optical structure according to any one of claims 1 to 9, **characterised in that** the structural elements (5) have a rising portion (17), a fading portion (18) and exactly one rising flank (19a), wherein the part of the beam (6) incident on the rising portion (17) of the structural element is refracted to form a first exit beam (7), said first exit beam (7) being scattered below the h-axis, the part of the beam (6) incident on the fading portion (18) of the structural element is refracted to a second exit beam (8), said second exit beam (8) being scattered above the h-axis, the part of the beam (6) incident on the flank (19a) of the structural element being refracted to a third exit beam (9a), said third exit beam (9a) being scattered above the h-axis, and the second exit beam (8) is preferably scattered in a range between 0° and 3° above the h-axis, and the flank (19a) preferably has a slope in a range between 5° and 20° or a slope of approximately 13.8° or 18.9°, and the third exit beam (9a) is preferably scattered in a range between 2° and 4° or between 4° and 5° or between 5° and 7° above the h-axis.

11. Optical structure according to any one of claims 1 to 9, **characterised in that** the structural elements (5) have a rising portion (17), a fading portion (18) and exactly three rising flanks (19a, 19b, 19c), wherein the part of the beam (6) incident on the rising portion (17) of the structural element is refracted to form a first exit beam (7), said first exit beam (7) being scattered below the h-axis, the part of the beam (6) incident on the fading portion (18) of the structural element is refracted to a second exit beam (8), said second exit beam (8) being scattered above the h-axis, the part of the beam (6) incident on the flanks (19a, 19b, 19c) of the structural element is refracted into a third, a fourth and a fifth exit beam (9a, 9b, 9c), respectively, said exit beams (9a, 9b, 9c) being scattered into a region above the h-axis and the fourth exit beam (9b) overlapping neither the third exit beam (9a) nor the fifth exit beam (9c) in the scattering pattern, and the second exit beam (8) is preferably scattered in a range between 0° and 3° above the h-axis, and the first and third flanks (9a, 9c) preferably have a slope in a range between 8° and 12° or an slope of about 10° and the second flank (9b) has a slope in a range between 12° and 16° or a slope of about 14°, and the third and fifth exit beams (9a, 9c) are preferably scattered in a range between 4° and 6° above the h-axis and the fourth exit beam (9b) is scattered in a range between 6° and 8° above the h-axis.

12. Optical structure according to any one of claims 1 to 9, **characterised in that** the V-shaped flank (19a) has a vertex (21) and an aperture angle (22), the corner point (21) being located in the geometric centre (24) of its base (10), wherein the part of the beam (6) incident on the rising portion (17) of the structural element is refracted into a first exit beam (7), said first exit beam (7) being scattered below the h-axis, the part of the beam (6) incident on the fading portion (18) of the structural element is refracted into a second exit beam (8), said second exit beam (8) being scattered above the h-axis, the part of the beam (6) incident on the V-shaped flank (19a) of the structural element being refracted to a third and a fourth exit beam (9a, 9b), respectively, said exit beams (9a, 9b) being scattered in a region above the h-axis and the third exit beam (9a) and the fourth exit beam (9b) not overlapping in the scattering pattern, said V-shaped flank (19a) preferably having a slope in a range between 8° and 20° or a slope of about 18.9° and/or the third exit beam (9a) being scattered in a range between 3° and 7° vertically and between -12° and -7° horizontally and/or the fourth exit beam (9b) being scattered in a range between 3° and 7° vertically and between +7° and +12° horizontally.

13. Optical structure according to any one of claims 1 to 12, **characterised in that** the dimension of a structural element (5), for example a circumferential diameter (25) and/or the maximum distance (23) from the base surface (10), is greater, in particular very much greater, than the wavelength of visible light.

14. Optical structure according to any one of claims 1 to 13, **characterised in that** it is disposed on at least one, preferably exactly one, boundary surface of an optical element, which is realised as a diffusing plate or cover plate (26) of the lighting device (2), and/or is disposed on at least one surface of an optical element realised as a lens (27), in particular a projection lens of the lighting device (2), and/or is disposed at the light exit side (28) of the lens (27).

15. Optical structure according to any one of claims 1 to 14, **characterised in that** the first exit beams (7) modify the first unmodified light distribution (3) to the second modified light distribution (4) in such a way that the second modified light distribution (4) has a lower gradient of the HD limit, and the further exit beams (9a, 9b, 9c) modify the first unmodified light distribution (3) to the second modified light distribution (4) and form a "signlight" partial light distribution.

16. Lighting device with at least one, preferably exactly one, optical structure (1) according to any one of claims 1 to 15.

17. Lighting device according to claim 16, **characterised in that** the lighting device (2) is a projection system, which lighting device (2) preferably comprises at least one light source (29), at least one reflector (30) and at least one lens (27), in particular a projection lens, and the at least one optical structure (1) is preferably disposed at the lens (27) and/or is realised as an additional optical element (31).

18. Lighting device according to claim 17, **characterised in that** the lighting device (2) is a reflection system, which lighting device (2) preferably comprises at least one free-form reflector (30) and at least one light source (29) as well as at least one diffusing and/or at least one covering lens (26), and the at least one optical structure (1) is preferably disposed at the at least one diffusing and/or the at least one covering lens (26) and/or is realised as an additional optical element (31).

19. Vehicle headlamp comprising at least one lighting device according to any one of claims 16 to 18.

## Revendications

1. Structure optique pour un dispositif d'éclairage (2) d'un projecteur de véhicule automobile, lequel dispositif d'éclairage (2) est conçu pour émettre de la lumière afin de former une première répartition lumineuse (3) non modifiée dans une zone située devant le dispositif d'éclairage (2), la structure optique (1) étant associée au dispositif d'éclairage (2) ou faisant partie du dispositif d'éclairage (2) de telle sorte que la structure optique (1) est irradiée par au moins une partie du flux lumineux total du dispositif d'éclairage (2), la distribution de lumière non modifiée (3) - générée par le dispositif d'éclairage (2) - étant modifiée au moyen de la structure optique (1) à une deuxième distribution de lumière (4) modifiée prédéfinissable, dans laquelle la structure optique (1) est constituée de deux, trois ou plusieurs éléments structurels optiques (5, 5'), chaque élément structurel (5, 5') ayant un effet de diffusion de la lumière, et un premier sous-ensemble des éléments structurels (5) étant conçu de telle sorte que des faisceaux (6) incidents sur ce premier sous-ensemble des éléments structurels (5) et générés par le dispositif d'éclairage (2) passent à travers le premier sous-ensemble des éléments structurels (5), dans lequel chaque faisceau (6) est réfractée par l'élément de structure (5) respectif en une première faisceau de sortie (7), en une deuxième faisceau de sortie (8) et en au moins une autre faisceau de sortie (9a, 9b, 9c), **caractérisé en ce que** le premier sous-ensemble des éléments de structure (5) comprends au moins une zone montante (17), une zone de diminution (18) et au moins un flanc ascendant (19a, 19b, 19c), dans laquelle ladite zone ascendante (17) réfracte le faisceau (6) de rayons incidents sur l'élément structurel respectif (5) et généré par le dispositif d'éclairage (2) en premier faisceau de sortie (7), dans laquelle ladite zone de diminution (18) réfracte le faisceau (6) arrivant sur l'élément de construction (5) respectif et générée par le dispositif d'éclairage (2) en la deuxième faisceau de sortie (8), et ledit au moins un flanc ascendant (19a, 19b, 19c) réfracte le faisceau (6) arrivant sur l'élément de construction (5) respectif et généré par le dispositif d'éclairage (2) en au moins un autre faisceau de sortie (9a, 9b, 9c), ledit au moins un flanc ascendant (19a) étant sensiblement en forme de V dans une section à travers l'élément structurel (5) le long d'un plan parallèle à une surface de base hexagonale (10) de l'élément structurel (5).

2. Structure optique selon la revendication 1, **caractérisée en ce qu'**au moins deux des faisceaux de sortie (7, 8, 9a, 9b, 9c) ne se chevauchent pas dans l'image de diffusion.

3. Structure optique selon la revendication 1 ou 2, **caractérisée en ce qu'**un deuxième sous-ensemble des éléments structurels (5') est conçu de telle sorte que la lumière incidente sur ce deuxième sous-ensemble des éléments structurels (5') est diffusée sous la forme d'un seul faisceau exactement.

4. Structure optique selon l'une quelconque des revendications 1 à 3, **caractérisée en ce que** les éléments structurels (5, 5') présentent une surface de base hexagonale régulière (10), c'est-à-dire que les surfaces de base (10) des éléments structurels (5, 5') couvrent entièrement un réseau hexagonal régulier (13) et que les surfaces (11) entre les sommets (12) du réseau (13) sont couvertes par la surface de base (10) d'un seul élément structurel (5, 5').

5. Structure optique selon la revendication 4, **caractérisée en ce que** le réseau hexagonal régulier (13) présente une, deux ou plusieurs rangées parallèles (14), lesdites rangées (14) s'étendant parallèlement à une direction (16) définie par une diagonale à travers deux côtés (15) de l'une des surfaces (11), et les surfaces de base (10) du premier sous-ensemble des éléments structurels (5), qui sont formés comme des hexagones réguliers, couvrant une rangée sur deux (14').

6. Structure optique selon l'une quelconque des revendications 1 à 5, **caractérisée en ce que** ladite zone montante (17) se prolonge en continu par ledit au moins un flanc ascendant (19a, 19b, 19c) et/ou ledit au moins un flanc ascendant (19a, 19b, 19c) se prolonge en continu par ladite zone de diminution (18).

7. Structure optique selon l'une quelconque des revendications 1 à 6, **caractérisée en ce que** les éléments structurels (5) sont symétriques, en particulier symétriques par miroir, par rapport à un axe (20) respective qui passe par un centre géométrique (24) de l'élément structurel (5) parallèle à la diagonale sur deux côtés (15).

8. Structure optique selon l'une quelconque des revendications 1 à 7, **caractérisée en ce que** ledit au moins un flanc ascendant (19a), dans une section à travers l'élément de structure (5) le long d'un plan parallèle à la surface de base (10), est symétrique, en particulier symétrique par miroir, par rapport à un axe (20) passant par le centre géométrique (24) de l'élément de structure (5) parallèlement à la diagonale sur deux côtés (15) et présente un point d'angle (21) et un angle d'ouverture (22).

9. Structure optique selon la revendication 8, **caractérisée en ce que** l'angle d'ouverture (22) est compris de préférence dans une plage comprise entre 2° et 180° ou entre 10° et 180° ou entre 20° et 180° ou entre 30° et 180° ou entre 40° et 180° ou entre 50° et 180° ou entre 60° et 180° ou entre 70° et 180° ou entre 80° et 180° ou entre 90° et 180° ou entre 100° et 180° ou entre 110° et 180° ou entre 120° et 180° ou entre 130° et 180° ou entre 140° et 180° ou entre 150° et 180° ou entre 160° et 180° ou entre 170° et 180°.

10. Structure optique selon l'une quelconque des revendications 1 à 9, **caractérisée en ce que** les éléments structurels (5) présentent une zone ascendante (17), une zone de diminution (18) et exactement un flanc ascendant (19a), dans laquelle la partie du faisceau (6) incident sur la zone ascendante (17) de l'élément structurel est réfractée en un premier faisceau de sortie (7), ledit premier faisceau de sortie (7) étant diffusé en dessous de l'axe h, la partie du faisceau (6) incident sur la zone de diminution (18) de l'élément structurel est réfractée en un second faisceau de sortie (8), ledit deuxième faisceau de sortie (8) étant diffusé au-dessus de l'axe h, la partie du faisceau (6) incident sur le flanc (19a) de l'élément structurel est réfractée en un troisième faisceau de sortie (9a), ledit troisième faisceau de sortie (9a) étant diffusé au-dessus de l'axe h, et le deuxième faisceau de sortie (8) est de préférence diffusé dans une plage comprise entre 0° et 3° au-dessus de l'axe h, et le flanc (19a) présente de préférence une pente dans une plage comprise entre 5° et 20° ou une pente d'environ 13,8° ou 18,9° et le troisième faisceau de sortie (9a) est de préférence diffusé dans une plage comprise entre 2° et 4° ou entre 4° et 5° ou entre 5° et 7° au-dessus de l'axe h.

11. Structure optique selon l'une quelconque des revendications 1 à 9, **caractérisée en ce que** les éléments structurels (5) présentent une zone ascendante (17), une zone de diminution (18) et exactement trois flancs ascendants (19a, 19b, 19c), dans laquelle la partie du faisceau (6) incident sur la zone ascendante (17) de l'élément structurel est réfractée en un premier faisceau de sortie (7), ledit premier faisceau de sortie (7) étant diffusé en dessous de l'axe h, la partie du faisceau (6) incident sur la zone de diminution (18) de l'élément de structure est réfractée en un second faisceau de sortie (8), ledit second faisceau de sortie (8) étant diffusé au-dessus de l'axe h, la partie du faisceau (6) incident sur les flancs (19a, 19b, 19c) de l'élément structurel est réfracté en un troisième, un quatrième et un cinquième faisceau de sortie (9a, 9b, 9c), respectivement, lesdits faisceaux de sortie (9a, 9b, 9c) étant diffusés dans une région au-dessus de l'axe h et le quatrième faisceau de sortie (9b) ne chevauche ni le troisième faisceau de sortie (9a) ni le cinquième faisceau de sortie (9c) dans l'image de diffusion, et le deuxième faisceau de sortie (8) est de préférence diffusé dans une plage comprise entre 0° et 3° au-dessus de l'axe h, et les premier et troisième flancs (9a, 9c) présentent de préférence une pente dans une plage comprise entre 8° et 12° ou une pente d'environ 10° et le deuxième flanc (9b) présente une pente dans une plage comprise entre 12° et 16° ou une pente d'environ 14° et le troisième et le cinquième faisceau de sortie (9a, 9c) sont de préférence diffusés dans une plage comprise entre 4° et 6° au-dessus de l'axe h et le quatrième faisceau de sortie (9b) est diffusé dans une plage comprise entre 6° et 8° au-dessus de l'axe h.

12. Structure optique selon l'une quelconque des revendications 1 à 9, **caractérisée en ce que** le flanc en forme de V (19a) présente un sommet (21) et un angle d'ouverture (22), le sommet (21) étant situé dans le centre géométrique (24) de sa surface de base (10), la partie du faisceau (6) incident sur la zone de diminution (17) de l'élément de construction étant réfractée en un premier faisceau de sortie (7), ledit premier faisceau de sortie (7) étant diffusé sous l'axe h, la partie du faisceau (6) incident sur la zone de diminution (18) de l'élément de construction étant réfractée en un deuxième faisceau de sortie (8), ledit deuxième faisceau de sortie (8) étant diffusé au-dessus de l'axe h, la partie du faisceau (6) incident sur le flanc en forme de V (19a) de l'élément structurel étant réfractée en un troisième et un quatrième faisceau de sortie (9a, 9b), respectivement, lesdits faisceaux de sortie (9a), 9b) étant diffusés dans une région située au-dessus de l'axe h et le troisième faisceau de sortie (9a) et le quatrième faisceau de sortie (9b) ne se chevauchent pas dans le diagramme de diffusion, ledit flanc en forme de V (19a) présentant de préférence une pente dans une plage comprise entre 8° et 20° ou une pente d'environ 18,9° et/ou le troisième faisceau de sortie (9a) est diffusé dans une plage comprise entre 3° et 7° verticalement et entre -12° et -7° horizontalement et/ou le quatrième faisceau de sortie (9b) est diffusé dans une plage comprise entre 3° et 7° verticalement et entre +7° et +12° horizontalement.

13. Structure optique selon l'une quelconque des revendications 1 à 12, **caractérisée en ce que** la dimension d'un élément de structure (5), par exemple un diamètre circonférentiel (25) et/ou la distance maximale (23) par rapport à la surface de base (10), est supérieure, en particulier très supérieure, à la longueur d'onde de la lumière visible.

14. Structure optique selon l'une quelconque des revendications 1 à 13, **caractérisée en ce qu'**elle est disposée sur au moins une, de préférence exactement une, surface limite d'un élément optique, qui est réalisé sous la forme d'une plaque de diffusion ou de recouvrement (26) du dispositif d'éclairage (2), et/ou est disposée sur au moins une surface d'un élément optique réalisé sous la forme d'une lentille (27), en particulier une lentille de projection du dispositif d'éclairage (2), et/ou est disposée sur le côté de sortie de la lumière (28) de la lentille (27).

15. Structure optique selon l'une quelconque des revendications 1 à 14, **caractérisée en ce que** les premiers faisceaux de sortie (7) modifient la première distribution de lumière non modifiée (3) en la deuxième distribution de lumière modifiée (4) de telle manière que la deuxième distribution lumineuse modifiée (4) présente un gradient inférieur de la limite HD, et les autres faisceaux de sortie (9a, 9b, 9c) modifient la première distribution lumineuse non modifiée (3) pour former la deuxième distribution lumineuse modifiée (4) et former une distribution lumineuse partielle « signlight ».

16. Dispositif d'éclairage avec au moins une, de préférence exactement une, structure optique (1) selon l'une quelconque des revendications 1 à 15.

17. Dispositif d'éclairage selon la revendication 16, **caractérisé en ce que** le dispositif d'éclairage (2) est un système de projection, le dispositif d'éclairage (2) comprenant de préférence au moins une source de lumière (29), au moins un réflecteur (30) et au moins une lentille (27), en particulier une lentille de projection, et ladite au moins une structure optique (1) est de préférence disposée sur la lentille (27) et/ou est conçue comme un élément optique supplémentaire (31).

18. Dispositif d'éclairage selon la revendication 17, **caractérisé en ce que** le dispositif d'éclairage (2) est un système de réflexion, le dispositif d'éclairage (2) comprenant de préférence au moins un réflecteur à forme libre (30) et au moins une source lumineuse (29) ainsi qu'au moins une lentille de diffusion et/ou au moins une lentille de recouvrement (26), et ladite au moins une structure optique (1) est de préférence disposée sur ladite au moins une lentille de diffusion et/ou ladite au moins une lentille de recouvrement (26) et/ou est conçue comme un élément optique supplémentaire (31).

19. Projecteur de véhicule comprenant au moins un dispositif d'éclairage selon l'une quelconque des revendications 16 à 18.
